# EUROPEAN PATENT SPECIFICATION

(11) **EP 3 317 129 B1**
(45) Date of publication and mention of the grant of the patent: **11.03.2020**
(21) Application number: 16759855.6
(22) Date of filing: 27.06.2016
(51) Int. Cl.: B60C 19/00

(54) **TYRE FOR VEHICLE WHEELS**
REIFEN FÜR FAHRZEUGRÄDER
PNEU POUR ROUES DE VÉHICULE

(30) Priority: 30.06.2015 IT UB20151865
(43) Date of publication of application: 09.05.2018
(73) Proprietor: Pirelli Tyre S.P.A., 20126 Milan (IT)
(72) Inventor: PUPPI, Cristiano, I-20126 Milan (IT); SCOTTI, Andrea, I-20126 Milan (IT); CARACINO, Paola, I-20126 Milan (IT); CEREDA, Giuseppe, I-20126 Milan (IT)
(74) Representative: Brasca, Marco
(86) International application number: PCT/IB2016/053821
(87) International publication number: WO 2017/001997

(56) References cited:
- EP-A1- 2 123 491
- US-A1- 2014 014 248

## Description

### Technical field of the invention

The present invention relates to a tyre for vehicle wheels. In particular, the present invention relates to a high performance (HP) or ultra-high performance (UHP) tyre. In particular, the present invention relates to an HP or UHP tyre comprising soundproofing foams able to reduce the noise perceived in the passenger compartment of vehicles, due to the attenuation of the cavity noise of the tyre itself. More particularly, the present invention relates to a soundproofed tyre capable of withstanding the high stresses typical of HP or UHP tyres and effectively dissipating the heat produced during rolling.

### Background art

A tyre for vehicle wheels is typically mounted on the corresponding rim to form a wheel, intended to be associated to the hub of a vehicle.

The inner surface of the tyre and the rim define, after the assembly thereof, an inner annular cavity intended to be inflated with pressurized fluid, generally air, in order to support the load on the tyre.

During the rolling of the tyre on the road, the air present in the inner annular cavity is placed in vibration, as it is cyclically compressed in the tread crushing step, thus creating sound waves that resonate in the cavity.

The noise generated by air resonance in the cavity - known as cavity noise - then propagates to the passenger compartment of the vehicle, by transmission through the rim, the hub, the suspension and the frame, and is perceived as very annoying by passengers.

The frequencies at which the air resonates in the cavity are inversely proportional to the tyre circumference, and depend, among other things, also on the shape of the cavity itself, on the nature and shape of the materials that internally line it. Indicatively, the resonance frequency can range from about 50 to 400 Hz, typically around 180 - 220 Hz for car tyres, with a diameter of about 600 to 800 mm and 130 - 150 Hz for tyres of heavy vehicles, with a diameter of about 750 to 1200 mm.

In the automotive sector, it is increasingly required to generally improve the comfort of the driver and passengers, and in particular reduce the noise of the vehicles.

The automotive industry tends to produce ever lighter vehicles, and/or provided with ever more silent engines - such as electric motors - in which, by contrast, road noises are perceived with more annoyance.

The problem of reducing the cavity noise is therefore increasingly felt for both high range vehicles, in which comfort and, specifically soundproofing, are important requirements, and for sports cars, for which in fact a lowered distribution and particularly stiff damping and transmission systems are typical, which substantially do not attenuate the noise, which is transmitted virtually unchanged from the tyres to the compartment.

In order to reduce this type of noise it is known to introduce soundproofing materials in the inner cavity of the tyre by attaching, such as by gluing, strips of the same on the inner surface of the liner. The soundproofing material is able to reduce the sound wave.

Soundproofed tyres are disclosed in the following documents.

Document US 20130048181 describes a tyre for vehicles provided with a foam insert for dampening the noise inserted into the cavity of the tyre. A layer provided with an air permeable structure is placed between the foam insert and a radially inner surface of the tyre placed at the tread. This layer is adapted to make an air flow pass at least partly in contact with said radially inner surface. Such a layer separates the foam insert from the radially inner surface of the tyre. Typically, such a layer has a thickness of 1.5-3cm. This air permeable layer is produced from metal fibres.

Document EP 2123491 relates to an element adapted to absorb the noise that allows the rapid and reliable sealing of the tyre when the tyre passes over a nail. Such an element is made of porous material and is attached to an inner surface of a tyre placed at the tread. The element adapted to absorb the noise has a plurality of grooves on a radially outer peripheral surface thereof. The grooves delimit portions of the porous material in contact with and glued to the inner surface of the tyre. A maximum area of a groove section is between 20mm² and 100mm². If a through hole is formed in the tread due to a nail or similar element, the sealant liquid introduced through the tyre valve is guided into the hole up to seal it.

During the rolling of the tyre on the road, the deformation of the viscoelastic materials that make it up generates heat. The presence of the soundproofing material and of the glue that attaches it to the liner does not allow an effective drainage of the air, which touches the liner, to the interior and thus does not allow the release of the heat produced at the tread band. Tyres are known which are provided with a soundproofing material provided with channels and/or chambers adapted to dissipate such heat.

Document JP 2004 82947 describes a tyre provided with a large volume but light element adapted to absorb the noise joined to an inner peripheral surface of the tyre. The noise absorption element has a U-shaped section and delimits an air chamber located inside the toroidal volume of the tyre. The noise absorption element is provided with communication passages that connect the air chamber with the toroidal volume. Since air is allowed to pass between the air chamber and the toroidal volume, due to the communication passages, it is possible to prevent the air in the air chamber from heating and inhibit the ageing of the tyre due to the action of the heat.

Document US 2014/014248 discloses a method for producing a pneumatic tire in which a noise damper in the form of at least one continuous ribbon for reducing cavity resonance in the tire cavity is provided on the internal surface of the tire. The method includes: providing a vulcanized and shaped tire; mixing a composition for forming the noise damper with a foaming agent to produce a liquid composition; rotating the tire in an upright state and introducing the liquid composition onto the tire internal surface by a device for introducing the liquid composition; varying the relative positional relationship of the pneumatic tire and the device in the axial direction and forming the liquid composition into a gel; foaming and drying the gelled liquid composition.

### Summary

The power dissipated as heat by the tyre increases with the speed and temperature reached by the various parts of the tyre and depends on the same dissipated power and on the possibility to remove the heat produced locally. The Applicant has observed that this phenomenon is particularly significant at high and very high speeds (above 240 km/h).

High and ultra-high performance tyres, which are commonly referred to as "HP" or "UHP" tyres, are in particular those which allow reaching speeds exceeding 200 km/h up to 300 km/h. Examples of such tyres are those belonging to the classes "T", "U", "H", "V", "W", "Y", "ZR", according to the E.T.R.T.O. (European Tyre and Rim Technical Organisation) standard and competition (racing) tyres, in particular for four-wheel high-power vehicles. Typically, the tyres belonging to these classes have a maximum cross section width (C, chord) equal to 185 mm or greater, preferably not larger than 375 mm, more preferably of between 195 mm and 325 mm. These tires are preferably mounted on rims having seating diameters equal to or larger than 16 inches, preferably not larger than 24 inches, more preferably of between 17 inches and 22 inches. Typically, HP or UHP tyres can have for example a ratio H/C between the height of shoulder H and the maximum cross section width C of between 0.20 and 0.70.

The Applicant has noted that overheating at very high speeds (typically over 280 Km/h) is a particularly critical phenomenon for high (HP) and ultra-high (UHP) performance tyres, provided with polymeric foams (which are designed to provide high and ultra-high performance and at the same time ensure a high comfort of travel).

These foams are typically also thermal insulators.

At high speed and in particularly severe driving conditions, the tyre tread may overheat and transmit the heat inside, where the temperature can reach 120 °C or more.

The temperature reached by some parts of the tyre during use at high speed can become so high as to decompose and/or modify the elastomeric material of which the tyre is made. The overheating of the tyre, if not suitably controlled, for example in the area of the tread located at the equatorial plane of the tyre, in particular where the material thickness is greater and where a rib or a row of tread blocks is typically provided can affect the structural integrity of the tyre up to lead to actual breakage (for example: separation of elastomeric layers, detachment of the cords from the elastomeric material, breakage and detachment of the tread blocks).

In other words, the heat produced in the tyre whose inner surface is lined with soundproofing elements, having difficulty to disperse, remains located in the casing to a greater extent compared to the same situation in the absence of soundproofing and the breaking conditions, caused by the high speed thermal regimes, are achieved at lower speeds.

The Applicant has noted that the known solutions for dissipating heat in the presence of a soundproofing element provided with air chamber, such as that described in JP 2004 82947, are not suitable for use in high and ultra-high performance tyres.

During the rolling of the tyre, the soundproofing layer is in fact subjected to a centrifugal force that tends to crush it against the radially inner surface of the tyre itself. This force, however, is abruptly zeroed at the footprint area. The soundproofing layer is therefore subjected to cyclical variations of forces/deformations due precisely to the passage in the footprint area.

The speeds and accelerations to which HP and UHP tyres are subjected are such as to generate very high forces and force variations able to deform the soundproofing layer up to make it interfere with the sidewalls of the tyre or even to collapse, break and detach from the radially inner surface of the tyre.

The Applicant has noted that the presence of the air chamber (adapted to dissipate the heat produced) such as that described in JP 82 947 2004 structurally weakens the soundproofing layer and accentuates the above drawbacks.

The Applicant has therefore set the objective to improve the reliability of high and ultra-high performance (HP and UHP) tyres for vehicle wheels provided with soundproofing layer.

The Applicant has hypothesised that to reach this objective, it is possible to act on the soundproofing layer geometry to allow the dissipation of heat that develops inside the tyre structure.

This particular geometry must allow an efficient heat transmission from a crown area of the tyre towards the inner cavity of the tyre itself and at the same time limiting the deformations of said soundproofing layer and ensuring the integrity of the same when subjected to stress typical of HP or UHP tyres.

The Applicant has found that heat dissipation is favoured by the presence of a channel, with preferably circumferential development, defined between the soundproofing layer and the radially inner surface of the tyre. The channel defines, together with said radially inner surface, a heat dissipation path which favours the air flow that touches the radially inner surface. The air flow removes heat from the elastomeric material placed at the tread band and directs it towards inner areas of the tyre cavity. This air flow could be increased by a pumping action due to the cyclical crushing of the channel during the rolling of the tyre in operating conditions, and in particular during the passage in the footprint area.

The material of the soundproofing layer can be a polymeric foam of the closed cell type. The air passage between the channel and the inner chamber of the tyre takes place through the channel itself.

Preferably, the material of the soundproofing layer is a polymeric foam of the open cell type. In this case, the air passage between the channel and the inner chamber of the tyre can also take place through the cells of the material of the soundproofing layer.

The Applicant has found that a soundproofing layer that is compact in the dimensional development and provided with a channel of such a size as to allow a sufficient heat exchange without structurally weakening said soundproofing layer, allows obtaining the desired effects.

In the present description and following claims, the following definitions apply.

By "equatorial plane" of the tyre it is meant a plane perpendicular to the axis of rotation of the tyre and which divides the tyre into two symmetrically equal parts.

The terms "radial" and "axial" and the expressions "radially inner/outer" and "axially inner/outer" are used referring to a direction perpendicular and a direction parallel to the axis of rotation of the tyre, respectively. The terms "circumferential" and "circumferentially" are used with reference to the direction of the annular development of the tyre, namely the rolling direction of the tyre.

In particular, according to a first aspect, the present invention relates to a tyre for vehicle wheels having a maximum cross section width and comprising:
a tread band;
at least one soundproofing layer the profile of which has a radial height and an axial width, wherein said soundproofing layer is attached to a radially inner surface of the tyre placed at the tread band;
wherein the soundproofing layer delimits, together with the radially inner surface, a channel;
wherein the channel is extended along a substantially circumferential direction; wherein, in a radial section, the ratio Ar/S between the area of a passage section of the channel and an overall section of the soundproofing layer is comprised between about 0.04 and about 0.2.

Preferably, the ratio t/C between the radial height of the overall section of the soundproofing layer and the maximum cross section width of the tyre is less than or equal to about 0.2.

Preferably, in a radial section, the channel is arranged astride an equatorial plane of the tyre.

The channel is delimited by a groove formed in a radially outer face of the soundproofing layer and associated with the radially inner surface of the tyre, and by said radially inner surface of the tyre. In other words, said groove is formed in the face of the soundproofing layer and is closed by the radially inner surface of the tyre.

To prevent a structural weakening of the soundproofing layer, it has no conduits transversely intersecting the groove to connect the channel to the inner cavity of the tyre.

By "maximum cross section width" (or maximum chord) it is meant the maximum width of the tyre profile. In other words, the maximum cross section width is the size of the segment having the two axially outermost points of the tyre profile as its extremes.

By "overall section of the soundproofing layer" it is meant the surface of the footprint section of said layer, therefore also comprising the surface of the groove section formed in the soundproofing layer. It is therefore understood that a layer provided with a groove and the same layer without groove have the same overall section. For example, in the case of a soundproofing layer having a profile with a substantially rectangular radial section, the overall section S of the layer has an area equal to the product of the radial height by the axial width of the layer.

By substantially circumferential direction it is meant a direction generally facing in the direction of rotation of the tyre. Said substantially circumferential direction may be inclined with respect to the equatorial plane but with an inclination not higher than 20°.

The Applicant has verified that the compactness of the soundproofing layer and the size of the channel allow manufacturing high and ultra-high performance (HP and UHP) tyres of the soundproofed type that are better performing, reliable and safe.

The Applicant has verified that the structure of the invention increases the integrity of the soundproofing layer and at the same time allows removing heat from the area where it is generated the most, thereby decreasing the risk that excessive local heating could damage the tyre.

The Applicant has verified that, in particular, the tyre according to the invention allows limiting the deformations of the soundproofing layer, preventing the collapse thereof.

The Applicant has also verified that in the channel area, where the radially inner surface of the tyre (usually lined by the airtight elastomeric layer, or liner) is not in contact with the soundproofing material, the heat generated at the tread band flows in the air in contact with the radially inner surface and is removed by the motion of the air itself. In fact, the channel leaves the air free to flow.

The present invention, in at least one of the above aspects thereof, can exhibit one or more of the following preferred features.

Preferably, the ratio Ar/S is comprised between about 0.06 and about 0.18. More preferably, the ratio Ar/S is comprised between about 0.07 and about 0.16.

Preferably, the area of the passage section of the channel is comprised between about 150mm² and about 1600mm². More preferably, the area of the passage section of the channel is comprised between about 300mm² and about 1500mm². More preferably, the area of the passage section of the channel is comprised between about 500mm² and about 1200mm².

Preferably, in a radial section, the channel has a maximum radial dimension. By "maximum radial dimension" it is meant the maximum width of the channel measured in the radial section and along a direction parallel to the radial direction referred to the tyre.

Preferably, the ratio r/t between the maximum radial dimension of the channel and the radial height of the overall section of the soundproofing layer is comprised between about 0.2 and about 0.8. More preferably, the ratio r/t between the maximum radial dimension and the radial height is comprised between about 0.3 and about 0.7.

The Applicant believes that by keeping the height of the soundproofing layer relatively low, the layer itself is not subjected to excessive forces and force variations during rolling, in particular at high speeds.

Preferably, in a radial section, the channel has a maximum radial dimension greater than or equal to about 10mm. More preferably, the channel has a maximum radial dimension greater than or equal to about 15mm, even more preferably greater than or equal to about 20mm. Preferably, in a radial section, the channel has a maximum radial dimension smaller than or equal to about 35mm. More preferably, in a radial section, the channel has a maximum radial dimension smaller than or equal to about 30mm.

Preferably, in a radial section, the channel has a maximum axial dimension. By "maximum axial dimension" it is meant the maximum width of the channel measured in the radial section and along a direction parallel to the axial direction referred to the tyre.

Preferably, the ratio x/L between the maximum axial dimension of the channel and the axial width of the soundproofing layer is comprised between about 0.1 and about 0.4. More preferably, the ratio x/L between the maximum axial dimension and the axial width is comprised between about 0.2 and about 0.3.

Preferably, in a radial section, the channel has a maximum axial dimension comprised between about 30mm and about 100mm. More preferably, in a radial section, the channel has a maximum axial dimension comprised between about 50mm and 80mm.

Preferably, the overall section of the soundproofing layer is comprised between about 1200mm² and about 8000mm². More preferably, the overall section of the soundproofing layer is comprised between about 2400mm² and about 4800mm². The Applicant believes that a correct sizing of the channel allows obtaining a sufficient air flow for removing the heat generated during rolling of the tyre in the vicinity of the tyre portion lined with the soundproofing layer, while maintaining sufficient structural strength of the layer itself.

Preferably, the ratio L/C between the axial width of the soundproofing layer and the maximum cross section width of the tyre is comprised between about 0.5 and about 0.9. More preferably, the ratio L/C between the axial width of the soundproofing layer and the maximum cross section width is comprised between about 0.6 and about 0.8.

Preferably, the axial width of the soundproofing layer is comprised between about 80mm and about 200mm. More preferably, the axial width of the soundproofing layer is comprised between about 100mm and about 180mm, more preferably between 120mm and 160mm.

Preferably, the ratio t/C between the radial height of the overall section and the maximum cross section width is comprised between about 0.04 and about 0.2. More preferably, the ratio T/C between the radial height of the overall cross section and the maximum cross section width is comprised between about 0.05 and 0.018 and even more preferably, the ratio T/C is comprised between about 0.1 and about 0.16.

Preferably, the radial height of the overall section of the soundproofing layer is comprised between about 15mm and about 40mm. More preferably, the radial height of the overall section of the soundproofing layer is comprised between about 20mm and about 30mm.

Preferably, the tread band comprises a central rib (or a row of blocks) or positioned substantially at the equatorial plane of the tyre. The rib has an axial width. Preferably, the ratio x/k between the maximum axial dimension of the channel and the width of the rib is comprised between about 0.7 and about 1.2. More preferably, the ratio x/k between the maximum axial dimension of the channel and the width of the rib is comprised between about 0.9 and about 1.1. The channel is located at the rib where there is the highest concentration of heat produced. The axial width of the channel is correlated to that of the rib so as to optimise heat removal from that zone.

Preferably, in a radial section, a maximum axial dimension of the channel is placed at the radially inner surface of the tyre. In other words, the groove formed in the soundproofing layer has a maximum width at the face joined with the radially inner surface of the tyre. Preferably, in a radial section, the channel tapers from the radially inner surface of the tyre towards the interior of said tyre.

Preferably, in a radial section, a maximum radial dimension of the channel is placed at the equatorial plane of the tyre. Preferably, in a radial section, the channel is substantially symmetrical with respect to the equatorial plane of the tyre.

Preferably, in a radial section, the channel has a profile comprising a curved portion. Preferably, in a radial section, the channel has a semi-circular or semi-elliptical profile. In other words, the groove in the soundproofing material has a curved, semi-circular or elliptical profile. Preferably, in a radial section, the channel has a substantially triangular shape. These profiles allow the soundproofing layer to better withstand the stresses that are generated during rolling of the tyre. Preferably, an inner surface of the channel belonging to the soundproofing layer is devoid of sharp corners or has rounded corners. Preferably, a fillet radius of said rounded corners is at least 1mm. The lack of corners or the rounding of any existing ones allows preventing/limiting the trigger of breakage of the soundproofing material subjected to cyclic loads.

Preferably, a minimum thickness of the soundproofing layer is at least 5mm, more preferably at least 8mm. Preferably, said minimum thickness is located at a maximum radial dimension of the channel.

Preferably, the channel is in fluid communication with a radially inner chamber of the tyre.

The Applicant believes that, during rolling, the air inside the channel is subjected to a pumping action since the channel is partially crushed when it is outside the footprint area, owing to the centrifugal force, and expanded when located at the footprint area. The air, which removes heat by touching the radially inner surface, would therefore be pumped out of the channel into the radially inner chamber of the tyre through the ends of said channel.

In one embodiment, the channel extends circumferentially continuously about a main tyre axis. Preferably, the circumferential development direction of the channel lies on the equatorial plane of the tyre.

Preferably, the channel has mutually facing opposite ends. Preferably, the opposite ends are open. Preferably, at least one of the opposite ends is closed. Preferably, the channel passage section is constant along the entire circumferential development of said channel.

In one embodiment, the channel passage section is variable along the circumferential development of said channel.

In one embodiment, the channel comprises a plurality of distinct and circumferentially spaced sections.

Preferably, the sections of said plurality of sections are communicating with each other.

Preferably, each of the sections of said plurality of sections has a closed circumferential end. Preferably, each of the sections of said plurality of sections has an open circumferential end.

The one or more open ends allow the passage of air flowing in the channel and touching the radially inner surface of the tyre up into the radially inner chamber delimited by the tyre.

In one embodiment, the soundproofing layer comprises a plurality of discrete and circumferentially spaced blocks. Preferably, the number of blocks is comprised between four and twelve. Preferably, successive blocks delimit respective interstices therebetween.

Preferably, each block has a section of said channel.

Preferably, each of said sections has a first end open in an interstice delimited between two successive blocks. Preferably, each of said sections has a second end opposite the first end. Preferably, said second end is closed. Preferably, said second end is open. Preferably, each of said sections has a first end and a second end open in respective interstices delimited between two successive blocks. In this way, at least part of the hot air flow circulating within a channel is dissipated inside the cavity, thereby increasing the thermal exchange. The air flows from within each section, where it removes heat from the radially inner surface, up to the inner chamber of the tyre through the open ends and the interstices.

In one embodiment, the channel section passage section is variable along the circumferential development of said channel.

The channel may comprise a sequence of tapered sections. The taper can be oriented with respect to the rolling direction of the tyre or in the opposite direction. In other words, the passage section of said sections decreases or increases, respectively, when advancing in the rolling direction of the tyre. According to the Applicant, such provisions would favour the ejection of air from the channel during the crushing to which the soundproofing layer is subjected at the exit from the footprint area during the rolling of the tyre.

According to one embodiment, the channel sections are inclined by no more than 20°, preferably no more than 15° and even more preferably no more than 10° with respect to a direction parallel to the equatorial plane.

Preferably, the channel sections of the blocks have the same inclinations with respect to a direction parallel to the equatorial plane. In this way, facing ends of two sections present on contiguous blocks are axially offset and the air flows more freely in the tyre cavity.

In an alternative embodiment, the channel sections of the blocks have inclinations that are opposite two by two with respect to a direction parallel to the equatorial plane.

In one embodiment, the soundproofing layer comprises a single strip arranged as a circumference about the main axis of the tyre.

Preferably, said strip has opposite mutually juxtaposed end portions. Preferably, the opposite end portions delimit an interstice therebetween. Preferably, the opposite end portions are jointed to each other.

Preferably, the material of the soundproofing layer has a density of less than about 50Kg/m³, more preferably comprised between about 15kg/m³ and about 45kg/m³, even more preferably comprised between about 20kg/m³ and about 40kg/m³. The structure of the layer and of the channel is such that it is possible to adopt a foam with such a low density without risk of structural collapse due to the forces acting during the rolling of the tyre.

Preferably, the tyre comprises a layer of adhesive material interposed between the soundproofing layer and a radially inner surface of the tyre. Preferably, at the channel, the tyre is devoid of the adhesive material layer.

Preferably, the tyre of the invention is an HP (High Performance) or UHP (Ultra High Performance) tyre intended for equipping vehicles for the transport mainly of people, such as Sedan, Minivan, family, SUVs (Sport Utility Vehicles) and/or CUV (Crossover Utility Vehicle), typically a tyre that allows driving at speeds higher than at least 160 km/h. By SUV and CUV it is meant vehicles with raised distribution, typically four-wheel drive. The tyre of the invention can be used as a summer or winter or "all-season" (tyres usable in all seasons) tyre.

### Description of the drawings

Further features and advantages will appear more clearly from the detailed description of a preferred but non-exclusive embodiment of a high-performance soundproofed tyre according to the invention.

Such description is given hereinafter with reference to the accompanying drawings, provided only for illustrative and, therefore, non-limiting purposes, in which:
- Figure 1 schematically shows a radial section of a high-performance and soundproofed tyre for vehicles wheels according to the present invention;
- Figure 2 shows an equatorial section of the tyre in figure 1 according to an embodiment;
- Figure 3 shows an equatorial section of the tyre in figure 1 according to a different embodiment;
- Figure 4 shows a perspective view an element of the tyre in figure 3;
- Figure 5 shows a complete radial section of a variant of the tyre in figure 3;
- Figure 6 shows a complete radial section of another variant of the tyre in figure 3;
- Figure 7 shows a portion of the equatorial section of the tyre in figure 1 according to a further embodiment;
- Figure 8 shows a front view of a variant of the element in figure 4;
- Figure 9 shows a front view of a further variant of the element in figure 4;
- Figure 10 shows a graph of a Hammer Test;
- Figure 11 shows a graph of an integrity test of a front tyre;
- Figure 12 shows a graph of an integrity test of a rear tyre;
- Figure 13 shows a typical radial acceleration curve in relation to the time a corresponding tyre portion is subjected to a tread area during a full tyre revolution.

### Detailed description

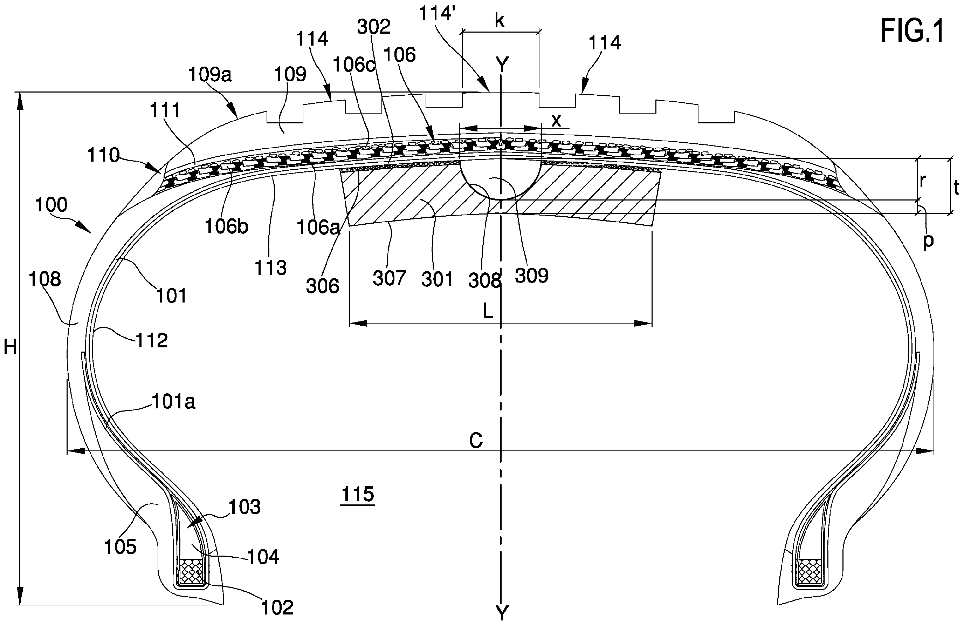

Figure 1 schematically shows a radial section of a high-performance and soundproofed tyre 100 for vehicles wheels comprising a soundproofing layer provided with a channel according to the present invention.

In particular in figure 1, "a" indicates an axial direction and "Y" indicates a radial direction, in particular Y-Y indicates the outline of the equatorial plane. Tyre 100 for vehicles comprises at least one carcass structure, comprising at least one carcass layer 101 having respectively opposite end flaps engaged with respective annular anchoring structures 102, referred to as bead cores, possibly associated to a bead filler 104. The tyre area comprising the bead core 102 and the filler 104 forms a bead structure 103 intended for anchoring tyre 100 onto a corresponding mounting rim, not shown.

The carcass structure is usually of radial type, i.e. the reinforcement elements of the at least one carcass layer 101 lie on planes comprising the axis of rotation X-X of tyre 100 and substantially perpendicular to the equatorial plane Y-Y of tyre 100. Said reinforcement elements generally consist of textile cords, such as rayon, nylon, polyester (for example polyethylene naphthalate, PEN). Each bead structure 103 is associated to the carcass structure by folding back of the opposite lateral edges of the at least one carcass layer 101 around the annular anchoring structure 102 so as to form the so-called carcass flaps 101a as shown in figure 1. In one embodiment, the coupling between the carcass structure and the bead structure 103 can be provided by a second carcass layer (not shown in figure 1) applied in an axially outer position with respect to the first carcass layer 101.

An anti-abrasive strip 105 is arranged in an outer position of each bead structure 103.

The carcass structure is associated to a belt structure 106 comprising one or more belt layers 106a, 106b placed in radial superposition with respect to one another and with respect to the carcass layer 101, having typically textile and/or metallic reinforcement cords incorporated within an elastomeric layer. Such reinforcement cords may have crossed orientation with respect to a direction of circumferential development of tyre 100. By "circumferential" direction it is meant a direction generally facing in the direction of rotation of the tyre.

At least one circumferential reinforcement layer 106, commonly known as a "0° belt", is applied in a radially outermost position to the belt layers 106a, 106b, comprising at least one circumferential belt layer.

The reinforcement layer (circumferential belt) may comprise a plurality of typically textile and/or metallic cords.

A tread band 109 is applied in a position radially outer to the belt structure 106.

Moreover, respective sidewalls 108 are applied in an axially outer position on the lateral surfaces of the carcass structure, each extending from one of the lateral edges 100 of tread 109 at the respective bead structure 103. The tyre portion comprised between the lateral edges 110 identifies the tyre crown. At such crown, thus up to the lateral edges 110 in a radially inner position of the tread band 109, the belt structure 106 preferably extends.

In a radially outer position, the tread band 109 has a rolling surface 109a intended to come in contact with the ground.

Circumferential grooves 107, which are connected by transverse notches (not shown in figure 1) so as to define a plurality of blocks 114 of various shapes and sizes preferably distributed in the form of ribs or according to circumferential rows on the rolling surface 109a, are generally made on this surface 109a. The tyre in figure 1 has a rib (or row of blocks) 114' typically but not exclusively central, located at the equatorial plane Y-Y.

An under-layer 111 may be arranged between the belt structure 106 and the tread band 109.

A layer of airproof elastomeric material 122, known as "liner", provides the necessary impermeability to the inflation air of the tyre, is typically arranged in a radially inner position with respect to the carcass layer 101.

Tyre 100 has a maximum cross section width or chord C and a shoulder height H and is preferably of the high or ultra-high performance (UHP or HP) type. Chord C is preferably comprised between about 185mm and about 375mm, even more preferably chord C is comprised between 195 mm and 325 mm. Preferably, a ratio H/C between the shoulder height H and the maximum cross section width is comprised between 0.20 and 0.70. For example, tyre 100 is intended for equipping vehicles for the transport mainly of people, such as Sedan, Minivan, family, SUVs (Sport Utility Vehicles) and/or CUV (Crossover Utility Vehicle) and may be used as a summer, winter or "all season" tyre.

A soundproofing layer 301 comprising an open cell or closed cell foam, is adhered to a radially inner surface 113 of the layer of airtight elastomeric material 112. The soundproofing layer 301 is located at tread 109. For example, the foam comprises a foamed polyurethane or polyolefin material. The soundproofing layer has a density of less than about 50Kg/m³, for example comprised between about 15 kg/m³ and about 45kg/m³, more preferably comprised between about 20kg/m³ and about 40kg/m³.

The soundproofing layer 301 may be made to adhere to the radially inner surface 113 of tyre 100 (in particular to the layer of airtight elastomeric material 112) by gluing with suitable adhesives, such as an acrylic adhesive. In the embodiment shown in figure 1, a layer of adhesive material 302 is shown interposed between the radially inner surface 113 and the soundproofing layer 301.

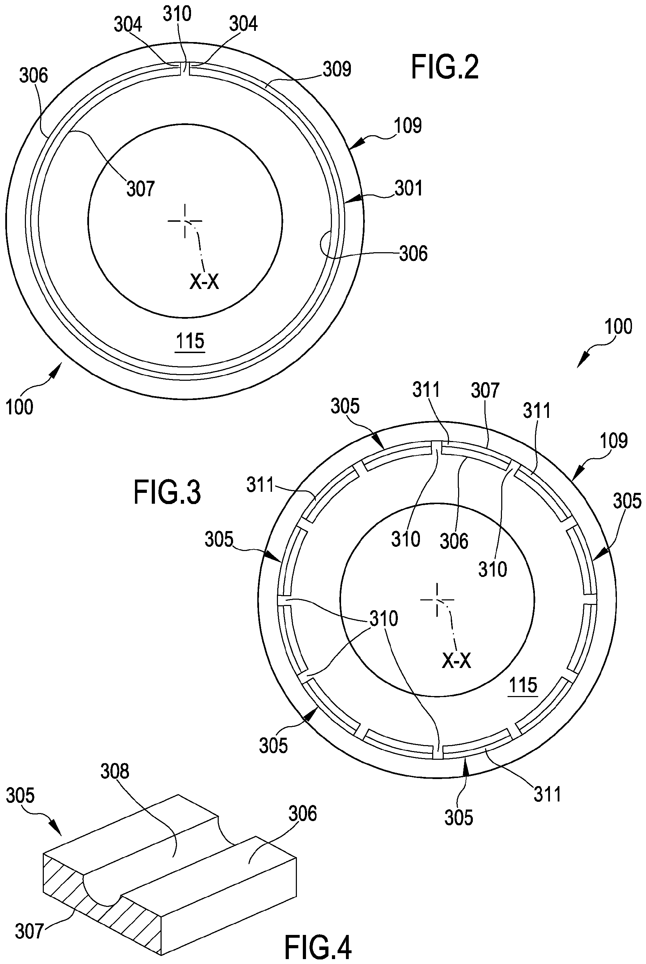

The soundproofing layer 301, which in figure 1 is only visible in a radial section, may be defined by a single strip 303 wrapped to form a circumference with opposite end portions 304 thereof side by side, according to the embodiment shown in figure 2.

In other embodiments, like those shown in figures 3, 4, 5, 6 and 7, the soundproofing layer 301 comprises a plurality of discrete blocks 305 circumferentially arranged one after the other. Blocks 305 may be mutually spaced. Each of blocks 305 is shaped like a sort of tile. Blocks 305 shown in figure 3 are for example twelve but the number can vary depending on the size of the tyre and of the blocks themselves.

The soundproofing layer 301 (both in the form of single strip 303 and of discrete blocks 305) has, once associated with tyre 100, a radially outer face 306 attached to the radially inner surface 133 of tyre 100 and a radially inner face 307 facing towards the axis of rotation of said tyre 100.

Figure 4 shows one of said blocks 305 or a section of said strip 303.

A groove 308 is formed into the radially outer face 306 of the soundproofing layer 301. Groove 308 develops along a circumferential direction and lies at the equatorial plane Y-Y of tyre 100. Said groove 308 delimits, along with a portion of radially inner surface 113 of tyre 100 lying facing groove 308 itself, a channel 309. In other words, channel 309 has an inner surface thereof partly defined by groove 308 (and thus soundproofing), partly by the layer of airtight material 112 (liner) belonging to tyre 100. Groove 308 extends continuously or as a sequence of discrete sections about the axis of rotation X-X of tyre 100.

In a radial plane of tyre 100 (according to the view in figure 1), the soundproofing layer 301 has an axial width L measured parallel to an axis of rotation of tyre 100 and a radial height t measured parallel to a radial direction of said tyre 100.

The axial width L of the soundproofing layer 301 is preferably comprised between about 50% and about 90% of chord C. More preferably, the axial width L of the soundproofing layer 301 is preferably comprised between about 60% and about 80% of chord C. In other words, the ratio L/C between the axial width L of the soundproofing layer 301 and the maximum cross section width C is comprised between about 0.5 and about 0.9, more preferably between about 0.6 and about 0.8. For example, the maximum cross section width C is equal to 250mm and the axial width L of the soundproofing layer 301 is 160mm (L/C = 0.64).

The radial height t of the soundproofing layer 301 is substantially constant along the axial width. The ratio t/C between the radial height t of the soundproofing layer 301 and the maximum cross section width C of tyre 100 is less than or equal to about 0.2. Preferably, the ratio t/C between height t and the maximum cross section width C is comprised between about 0.04 and about 0.2. More preferably, the ratio t/C between the radial height t and the maximum cross section width C is comprised between about 0.05 and about 0.018, more preferably between about 0.1 and about 0.16. For example, the maximum cross section width C is equal to 250mm and the radial height t is equal to 30mm (t/C = 0.12).

In the embodiment in figure 1, channel 309 lies centred with respect to the equatorial plane Y-Y of tyre 100 and has a symmetrical shape with respect to said equatorial plane Y-Y.

In a radial section (like that in figure 1), channel 309 has a maximum axial dimension x placed at the radially inner surface 113 of tyre 100 and tapers from said radially inner surface 113 towards the interior of said tyre 100. In this way, a maximum radial dimension r of channel 309 is placed at the equatorial plane Y-Y of tyre 100.

Preferably, the ratio r/t between the maximum radial dimension r and the radial height t is comprised between about 0.2 and about 0.8, more preferably between about 0.3 and about 0.7. Preferably, the maximum radial dimension r is greater than or equal to about 10mm. Preferably, the maximum radial dimension r is smaller than or equal to about 35mm. For example, t = 30 mm and r = 15 mm (r/t = 0.5).

Preferably, the ratio x/L between the maximum axial dimension x and the axial width L is comprised between about 0.1 and about 0.4, more preferably between about 0.2 and about 0.3. For example, L = 160mm and x = 30mm (x/L = 0.1875). The section (in the radial plane) of channel 309 has a semi-circular shape with a radius of 15mm.

The maximum axial dimension x is also correlated to an axial width k of rib 114. Preferably, the ratio x/k between the maximum axial dimension x and the axial width k of rib 114' is comprised between about 0.7 and about 1.2. In the section in figure 1, such ratio is approximately equal to 0.8. With x = 30mm, k = 37.5mm. Channel 309, seen in a radial section like that in figure 1, has an area of the passage section Ar. The soundproofing layer 301 in the same radial section has an overall area S understood as the surface of the section of said layer 301 also comprising the area of the passage section Ar of channel 309. In other words, the overall section S of the soundproofing layer 301 is the sum of the surface delimited by the profile of the soundproofing layer 301 and of the area of the passage section Ar of channel 309. In yet other words, the overall section S of the soundproofing layer 301 is that delimited between the radially inner surface 113 of tyre 100 and the radially innermost profile part of the soundproofing layer 301.

In said radial section, the ratio Ar/S between said area of the passage section Ar of channel 309 and the overall section S of the soundproofing layer 301 is smaller than or equal to about 0.2.

Preferably, the area of the passage section Ar of channel 309 is comprised between about 300mm² and about 1600mm². With the semi-circular shape having radius of 15mm, the channel area is Ar = 353.43 mm².

Preferably, the overall section S of the soundproofing layer 301 is comprised between about 1200mm² and about 8000mm², more preferably between about 2400mm² and about 4800mm². For example, the soundproofing layer 301 has a substantially rectangular shape with t = 30mm and L = 160mm. It follows that S = 4800mm².

Preferably, the ratio Ar/S is comprised between about 0.06 and about 0.18, more preferably between about 0.07 and about 0.16. For example, with Ar = 353.43mm² and S = 4800mm², the ratio Ar/S = 0.0736.

Preferably, an inner surface of channel 309 belonging to the soundproofing layer 301 (that is, the inner surface of groove 308) has no sharp corners or has rounded corners with a fillet radius for example of at least 1mm.

In the embodiment shown in figure 1, the section (in the radial plane) of channel 309 has a semi-circular shape, in which the semi-circumference belongs to the soundproofing layer 301 and the base segment is defined by the radially inner surface 113 of tyre 100.

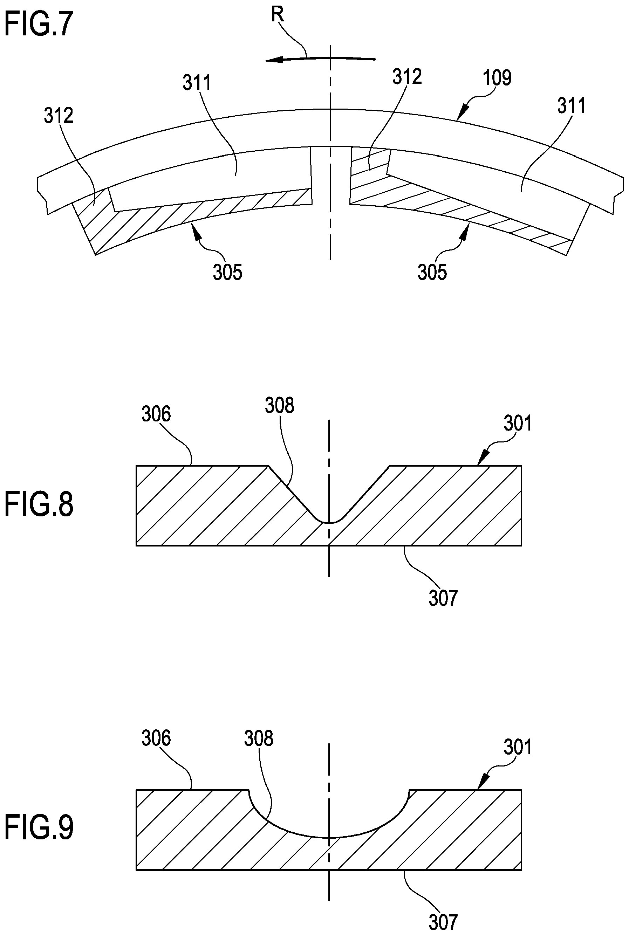

In the embodiment in figure 9, the section (in the radial plane) of channel 309 has a semi-elliptical shape. In the embodiment in figure 8, the section (in the radial plane) of channel 309 has an isosceles triangle shape in which the vertex defined by the two equal sides is arranged on the equatorial plane Y-Y and is rounded. Given the above geometry, a minimum thickness p of the soundproofing layer 301 is located at the maximum radial dimension r of channel 309, i.e. on the equatorial plane Y-Y. The minimum thickness p is at least 5mm, more preferably at least 8mm. For example, with t = 30 mm and r = 15 mm, p = 15mm.

In the embodiment in figure 2, channel 309 extends circumferentially continuously about a main axis of tyre 100. The area of the passage section Ar of channel 309 is constant along the entire circumferential development of said channel 309. The opposite end portions 304 of strip 303 are mutually facing but spaced to delimit an interstice 310 therebetween. Open ends of channel 309 are mutually facing and open in said interstice 310. In this way, channel 309 is in fluid communication with a radially inner chamber 115 delimited by tyre 100 and by the rim on which said tyre 100 is mounted.

In the embodiment in figure 3, a section 311 of channel 309 is formed in each of blocks 305. Two successive blocks 305 delimit a respective interstice 310 therebetween. Each of sections 311 has opposite ends open in the two interstices 310 located at the sides of block 305 in which section 311 is formed. Each section 311 is in fluid communication with the radially inner chamber 155 through interstices 310.

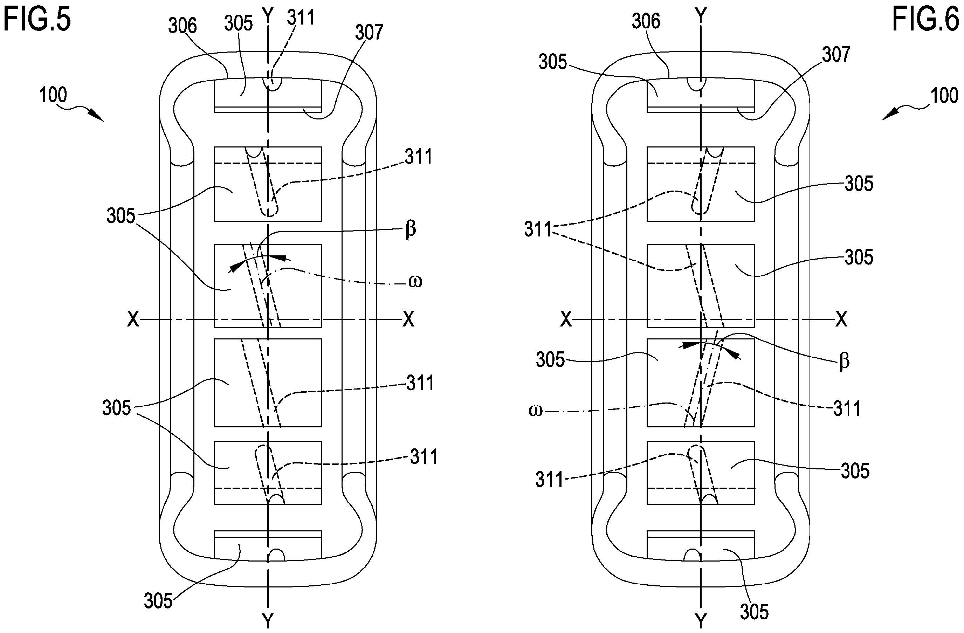

In respective two variants of the embodiment in figure 3, shown in figures 5 and 6, sections 311 of channel 309 are at an angle with respect to the circumferential direction according to an angle β of about 15°. Each section 311 is preferably still centred on the equatorial plane Y-Y.

In the embodiment in figure 5, all sections 311 are rotated by said angle β in the same direction, whereby facing ends of two sections 311 present on contiguous blocks 305 are axially offset.

In the embodiment in figure 6, two sections 311 of channel of contiguous blocks 305 have opposite inclinations with respect to the equatorial plane Y-Y.

In a variant of the embodiment in figure 3, shown in figure 6, each of sections 311 has an area of the passage section Ar that is variable along the circumferential development thereof. Section 311 tapers from an end thereof toward the opposite one. Each section 311 has both ends open (not shown) or one end open and the opposite one closed, for example by a portion of soundproofing layer 312 not crossed by channel 309 (figure 7).

Preferably, blocks 305 are arranged so that channel 309 has a sequence of sections 311 equally arranged and with the end with reduced and/or closed section according to the rolling direction R of the tyre. The reduced and/or closed end therefore is the one that first enters the footprint area of tyre 100 during the forward movement of the vehicle.

In all the embodiments, there are no conduits or cross holes crossing the soundproofing layer made to connect the channel to the inner cavity of the tyre.

In all the embodiments shown, the layer of adhesive material 302 is not deposited at channel 309 nor at interstices 310 to prevent undesired adhesions between portions of the layer and liner and to better allow heat transmission.

During the rolling on the road, it is believed that tyre 100 can generate heat mainly at the tread band 109 and in particular in rib 114'. The air inside channel 309 is subjected to a pumping action since channel 309 is partially crushed when it is outside the footprint area, owing to the centrifugal force, and expanded when located at the footprint area.

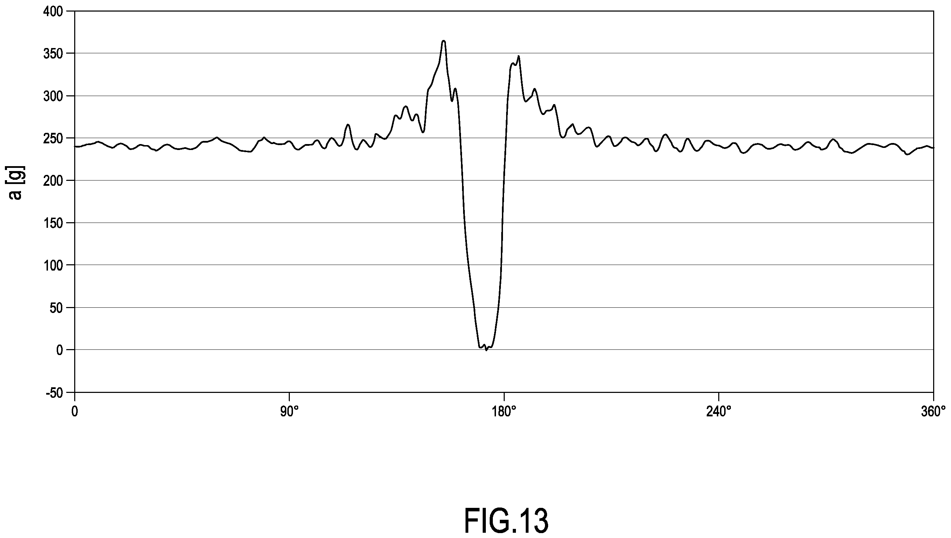

In fact, during the rolling of tyre 100, the soundproofing layer 301 is subjected to a centrifugal force that tends to crush it against the radially inner surface 113 of tyre 100 itself. This force acts cyclically since it is abruptly zeroed at the footprint area. Figure 13 shows an exemplary profile of a resulting radial acceleration in relation to the time to which a portion of tyre 100 may be subjected during a revolution of the tyre. During a first fraction of a complete tyre revolution, during which the tread area corresponding to said portion is not in contact with the ground, the acceleration is substantially constant and takes a value depending on the square of the rotation speed of tyre 100. During a second fraction of a complete tyre revolution, during which the tread area corresponding to said portion is in contact with the ground, the acceleration level drops substantially to zero, as can be seen in the central portion in figure 13, after an initial increase due to a deformation to which the tyre is subjected during the passage from a circumferential to a flat configuration, at the very beginning of the contact region between tyre 100 and the ground. A further increase in the acceleration level is encountered when the tread area corresponding to said tyre portion exits from the contact region.

Due to the cyclic variation of the centrifugal force, the air that removes the heat touching the radially inner surface 113 is therefore pumped out of channel 309 into the radially inner chamber 115 of tyre 100 through the ends of said channel and/or through the cells of the soundproofing material, if they are open cells.

### Dynamometer hammer test

A static test with dynamometric hammer was carried out in order to evaluate the noise absorption capacity.

The test was carried out on 245/30 ZR20 tyres mounted on respective rims, inflated to an initial internal pressure of 2.1 bar at room temperature of about 25 °C, with the tyre tread band resting on the ground and loaded with a vertical force (applied through the hub) of 480 kg. The tyre was stressed with a vertical force Fz by means of a hammer and the frequency response was measured.

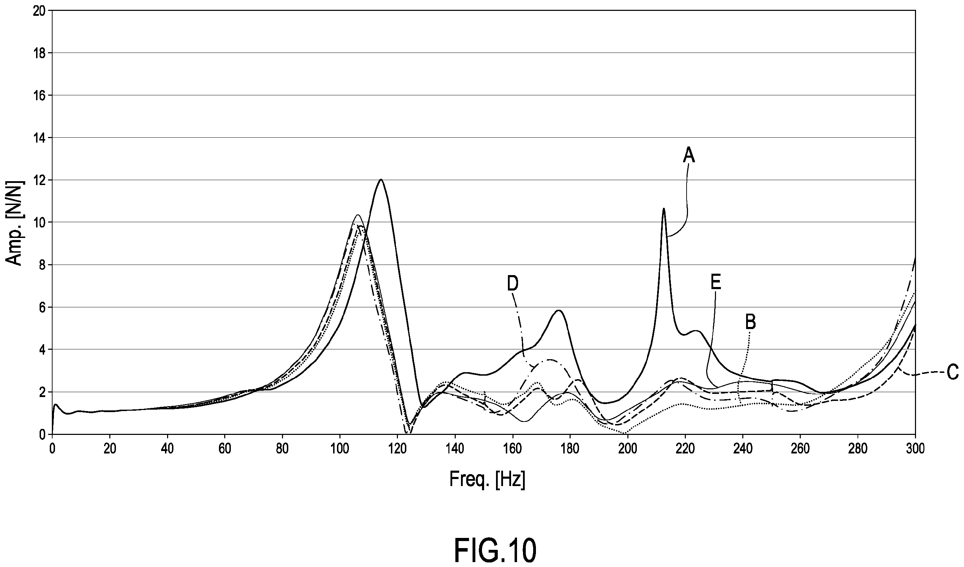

Figure 10 shows the frequency response of:
▪ A - a tyre with no soundproofing layer;
▪ B, C, D - tyres with full (no channel) soundproofing layer with density of 20, 30 and 40 kg/m³, respectively, in which the soundproofing layer comprises a plurality of blocks/tiles, each having dimensions of 160mm (axial width L) x220mm (circumferential length) x30mm (radial height t);
▪ E - tyre with soundproofing layer with a density of 40 kg/m³ (formed by tiles like those of B, C and D) provided with channel according to an embodiment of the invention (semi-circular profile with maximum radial dimension r of 15mm).

As can be seen, the peak at 210Hz present in the tyre without soundproofing layer (A) is completely absent in the tyres with full soundproofing layer (B, C, D). It should be noted that this peak is also absent in the tyre according to the invention (E). This demonstrates that the soundproofing layer properly carries out its noise absorption function and especially that the presence of the channel does not alter the such noise absorption capacity.

### High-speed integrity tests

Two high-speed integrity tests were conducted on respective tyres 100.

A first test (test 1) was conducted on UHP tyres for 245/30 ZR20 front wheels inflated to an initial internal pressure of 3.6 bar at room temperature of about 25 °C by rotating the tyre on a 2m diameter drum under a load of 500 kg.

A second test (test 2) was conducted on UHP tyres for 305/35 ZR19 rear wheels inflated to an initial internal pressure of 2.7 bar at room temperature of about 25 °C by rotating the tyre on a 2m diameter drum under a load of 550 kg.

Both tests consisted in bringing the tyre speed from 0 km/h to a high initial speed value in a predefined time (step 1), then proceeding to increase the speed by a default value in a predefined time (step 2, step 3, ... step n) up to the appearance of faults or breaks in the tyre.

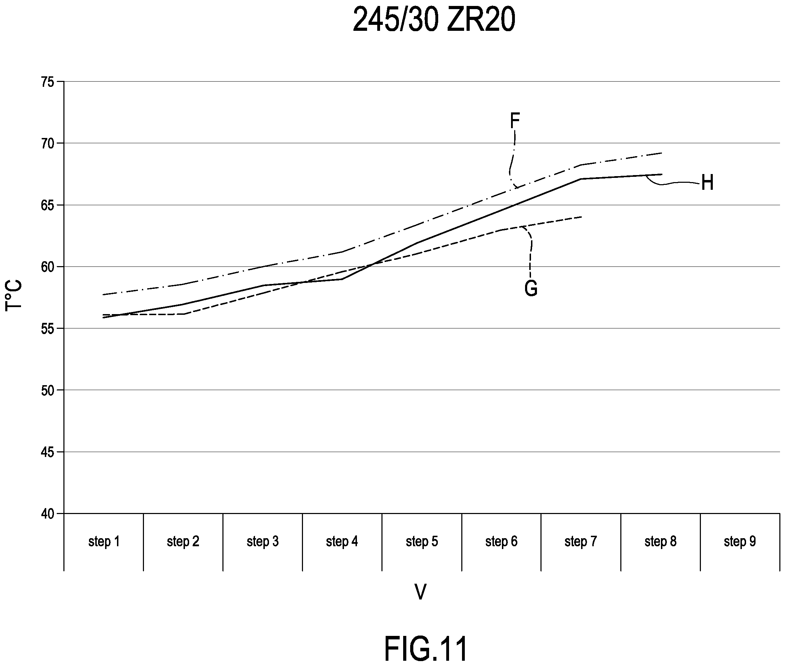

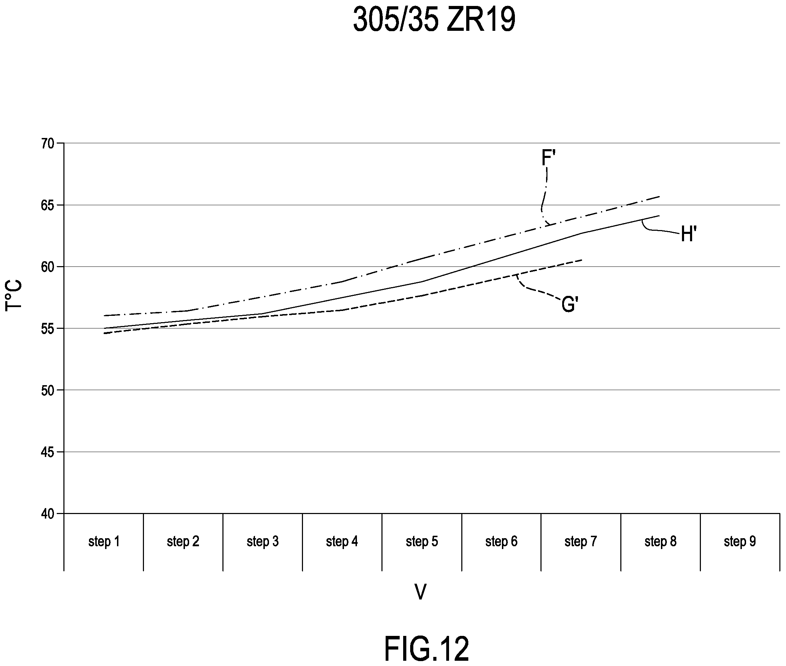

The test results are shown in the following tables 1 and 2 and graphically represented in figures 11 and 12.

The tyres tested in both tests had the following configurations:
▪ F, F' - tyre with no soundproofing layer;
▪ G, G' - tyre with full (no channel) soundproofing layer with density of 40 kg/m³, in which the soundproofing layer comprises a plurality of blocks/tiles, each having dimensions of 160mm (axial width L) x220mm (circumferential length) x30mm (radial height t);
▪ H, H'- tyre with soundproofing layer with a density of 40 kg/m³ (formed by tiles like those of G, G') provided with channel according to the invention (semi-circular profile with maximum radial dimension r of 15mm).

The tyres of the first test were provided with a sensor for measuring the temperature of the inner chamber during rolling. Tables 1 and 2 shows the temperatures in °C reached in the inner chamber of the respective tyre at each step.

**Table 1**

| | | 245/30 ZR20 front Temperature °C in the radially inner chamber | | |
|---|---|---|---|---|
| | Speed step | F- With no soundproofing layer | G - Soundproofing layer with no channel | H - Soundproofing layer with channel |
| | step 1 | 57.7 | 56.1 | 55.9 |
| | step 2 | 58.7 | 56.2 | 57 |
| | step 3 | 60 | 57.9 | 58.5 |
| | step 4 | 61.3 | 59.7 | 59.1 |
| | step 5 | 63.7 | 61.3 | 62.2 |
| | step 6 | 66.2 | 63.1 | 64.8 |
| | step 7 | 68.4 | 64.2 | 67.3 |
| | step 8 | 69.3 | | 67.7 |

**Table 2**

| | | 305/35 ZR19 rear Temperature °C in the radially inner chamber | | |
|---|---|---|---|---|
| | Speed step | F' - With no soundproofin g layer | G'- Soundproofing layer with no channel | H' - Soundproofing layer with channel |
| | step 1 | 56 | 54.6 | 55 |
| | step 2 | 56.4 | 55.3 | 55.6 |
| | step 3 | 57.6 | 56 | 56.2 |
| | step 4 | 58.8 | 56.5 | 57.5 |
| | step 5 | 60.7 | 57.7 | 58.8 |
| | step 6 | 62.4 | 59.1 | 60.9 |
| | step 7 | 64.1 | 60.6 | 62.8 |
| | step 8 | 65.8 | | 64.3 |

The data in the above tables are depicted in figures 11 (Table 1) and 12 (Table 2), respectively. As can be seen, the temperature F, F' reached in the chamber of tyre 100 without soundproofing layer is higher than in the other two cases G, G', H, H'. This phenomenon is due to the fact that the soundproofing layer is an insulator and prevents heat from reaching the interior of the tyre. Temperature H, H' reached inside the chamber of the tyre according to the invention (provided with soundproofing layer with channel) is higher than that G, G' reached in the tyre chamber provided with soundproofing layer without channel. This means that channel 309 allows removing more effectively the heat from the tyre structure at the tread band up to make it reach the interior of the tyre. The soundproofing layer without channel instead keeps the inner part of the tyre colder and correspondingly the area corresponding to the tread band hotter.

As can in fact be seen in Table 1 and in the graph in figure 11, test G of the front tyre provided with soundproofing layer without channel ended before the other two F, H, probably because the higher temperature reached by the tyre structure caused the yielding.

A similar result is shown in Table 2 and in figure 12 for the tyre according to the invention G' with respect to tyres F', H'.

## Claims

1. Tyre for vehicle wheels, comprising:
a tread band (109);
at least one soundproofing layer (301) having a radial height (t) and an axial width (L), wherein said soundproofing layer (301) is attached to a radially inner surface (113) of the tyre (100) placed at the tread band (109);
wherein the soundproofing layer (301) delimits, together with the radially inner surface (113), a channel (309);
wherein the channel (309) is delimited by a groove (308) formed in a radially outer face (306) of the soundproofing layer (301) and associated with the radially inner surface (133) of the tyre (100) and by said radially inner surface (133) of the tyre (100);
wherein the channel (309) is extended along a substantially circumferential direction;
**characterised in that**, in a radial section, the ratio Ar/S between the area of a passage section (Ar) of the channel (309) and an overall section (S) of the soundproofing layer (301) is comprised between about 0.04 and about 0.2;
wherein the overall section (S) of the soundproofing layer (301) is the surface of a footprint section of said soundproofing layer (301), also comprising the surface of a groove section formed in the soundproofing layer (301).

2. Tyre as claimed in claim 1, wherein the ratio t/C between the radial height (t) of the overall section of the soundproofing layer (301) and the maximum cross section width (C) of the tyre (100) is less than or equal to about 0.2.

3. Tyre as claimed in claim 1 or 2, wherein the area of the passage section (Ar) of the channel (309) is comprised between about 150mm² and about 1600mm².

4. Tyre as claimed in claim 1, 2 or 3, wherein, in a radial section, the channel (309) has a maximum radial size (r), wherein the ratio r/t between the maximum radial size (r) and the radial height (t) of the overall section is comprised between about 0.2 and about 0.8.

5. Tyre as claimed in one of the preceding claims, wherein, in a radial section, the channel (309) has a maximum radial size (r) greater than or equal to about 10mm.

6. Tyre as claimed in one of the preceding claims, wherein, in a radial section, the channel (309) has a maximum axial size (x), wherein the ratio x/L between the maximum axial size (x) and the axial width (L) of the soundproofing layer is comprised between about 0.1 and about 0.4.

7. Tyre as claimed in one of the preceding claims, wherein the ratio t/C between the radial height of the overall section (t) and the maximum cross section width (C) is comprised between about 0.05 and about 0.18.

8. Tyre as claimed in one of the preceding claims, wherein, in a radial section, the channel (309) is substantially centred with respect to an equatorial plane (Y-Y) of the tyre (100).

9. Tyre as claimed in claim 6, wherein the tread band (109) comprises a central rib (114') placed substantially at the equatorial plane (Y-Y) of the tyre (100) and having an axial width (k), wherein the ratio x/k between the maximum axial size (x) and the width (k) of the central rib (114') is comprised between about 0.7 and about 1.2.

10. Tyre as claimed in one of the preceding claims, wherein, in a radial section, the channel (309) has a portion with curved profile.

11. Tyre as claimed in the preceding claim, wherein, in a radial section, the channel (309) has a portion with semi-circular or semi-elliptical profile.

12. Tyre as claimed in one of the preceding claims, wherein the soundproofing layer (301) comprises a plurality of discrete and circumferentially spaced blocks (305) and each block (305) has a section (311) of said channel (309).

13. Tyre as claimed in the preceding claim, wherein each of said sections (311) has a first end open in an interstice (310) delimited between two successive blocks (305).

14. Tyre as claimed in the preceding claim, wherein each of said sections (305) has a second end opposite the first end and closed.

15. Tyre as claimed in one of the preceding claims from 1 to 12, wherein each of said sections (305) has a first end and a second end that are open in respective interstices (310) delimited between two successive blocks (305).

## Patentansprüche

1. Reifen für Fahrzeugräder, umfassend:
einen Laufflächenring (109);
zumindest eine schallabsorbierende Lage (301) mit einer radialen Höhe (t) und einer axialen Breite (L), wobei die schallabsorbierende Lage (301) an einer radial inneren Oberfläche (113) des Reifens (100) angebracht ist, die an dem Laufflächenring (109) platziert ist;
wobei die schallabsorbierende Lage (301) zusammen mit der radial inneren Oberfläche (113) einen Kanal (309) begrenzt;
wobei der Kanal (309) durch eine Nut (308), die in einer radial äußeren Seite (306) der schallabsorbierenden Lage (301) ausgebildet und der radial inneren Oberfläche (133) des Reifens (100) zugeordnet ist, und durch die radial innere Oberfläche (133) des Reifens (100) begrenzt ist;
wobei der Kanal (309) sich im Wesentlichen entlang einer Umfangsrichtung erstreckt;
**dadurch gekennzeichnet, dass** in einem radialen Abschnitt das Verhältnis Ar/S zwischen der Fläche eines Durchgangsabschnitts (Ar) des Kanals (309) und einem Gesamtabschnitt (S) der schallabsorbierenden Lage (301) zwischen etwa 0,04 und etwa 0,2 beträgt;
wobei der Gesamtabschnitt (S) der schallabsorbierenden Lage (301) die Oberfläche eines Standflächenabschnitts der schallabsorbierenden Lage (301) ist, und auch die Oberfläche eines Nutabschnitts umfasst, der in der schallabsorbierenden Lage (301) ausgebildet ist.

2. Reifen nach Anspruch 1, wobei das Verhältnis t/C zwischen der radialen Höhe (t) des Gesamtabschnitts der schallabsorbierenden Lage (301) und der maximalen Querschnittsbreite (C) des Reifens (100) kleiner als oder gleich etwa 0,2 ist.

3. Reifen nach Anspruch 1 oder 2, wobei die Fläche des Durchgangsabschnitts (Ar) des Kanals (309) zwischen etwa 150 mm² und etwa 1600 mm² beträgt.

4. Reifen nach Anspruch 1, 2 oder 3, wobei in einem radialen Abschnitt der Kanal (309) eine maximale radiale Größe (r) aufweist, wobei das Verhältnis r/t zwischen der maximalen radialen Größe (r) und der radialen Höhe (t) des Gesamtabschnitts zwischen etwa 0,2 und etwa 0,8 beträgt.

5. Reifen nach einem der vorhergehenden Ansprüche, wobei in einem radialen Abschnitt der Kanal (309) eine maximale radiale Größe (r) größer als oder gleich etwa 10 mm aufweist.

6. Reifen nach einem der vorhergehenden Ansprüche, wobei in einem radialen Abschnitt der Kanal (309) eine maximale axiale Größe (x) aufweist, wobei das Verhältnis x/L zwischen der maximalen axialen Größe (x) und der axialen Breite (L) der schallabsorbierenden Lage zwischen etwa 0,1 und etwa 0,4 beträgt.

7. Reifen nach einem der vorhergehenden Ansprüche, wobei das Verhältnis t/C zwischen der radialen Höhe des Gesamtabschnitts (t) und der maximalen Querschnittsbreite (C) zwischen etwa 0,05 und etwa 0,18 beträgt.

8. Reifen nach einem der vorhergehenden Ansprüche, wobei in einem radialen Abschnitt der Kanal (309) in Bezug auf eine Äquatorialebene (Y-Y) des Reifens (100) im Wesentlichen zentriert ist.

9. Reifen nach Anspruch 6, wobei der Laufflächenring (109) eine zentrale Rippe (114') umfasst, die im Wesentlichen an der Äquatorialebene (Y-Y) des Reifens (100) platziert ist und eine axiale Breite (k) aufweist, wobei das Verhältnis x/k zwischen der maximalen axialen Größe (x) und der Breite (k) der zentralen Rippe (114') zwischen etwa 0,7 und etwa 1,2 beträgt.

10. Reifen nach einem der vorhergehenden Ansprüche, wobei in einem radialen Abschnitt der Kanal (309) einen Abschnitt mit gekrümmtem Profil aufweist.

11. Reifen nach dem vorhergehenden Anspruch, wobei in einem radialen Abschnitt der Kanal (309) einen Abschnitt mit einem halbkreisförmigen oder halbelliptischen Profil aufweist.

12. Reifen nach einem der vorhergehenden Ansprüche, wobei die schallabsorbierende Lage (301) eine Vielzahl von diskreten und in Umfangsrichtung beabstandeten Blöcken (305) aufweist, und jeder Block (305) einen Abschnitt (311) des Kanals (309) aufweist.

13. Reifen nach dem vorhergehenden Anspruch, wobei jeder der Abschnitte (311) ein erstes Ende aufweist, das sich in einen Zwischenraum (310) öffnet, der zwischen zwei aufeinanderfolgenden Blöcken (305) begrenzt ist.

14. Reifen nach dem vorhergehenden Anspruch, wobei jeder der Abschnitte (305) ein zweites Ende aufweist, das dem ersten Ende entgegengesetzt ist.

15. Reifen nach einem der vorhergehenden Ansprüche 1 bis 12, wobei jeder der Abschnitte (305) ein erstes Ende und ein zweites Ende aufweist, die in jeweiligen Zwischenräumen offen sind, die zwischen zwei aufeinander folgenden Blöcken (305) begrenzt sind.

## Revendications

1. Pneu pour roues de véhicule, comprenant :
une bande de roulement (109) ;
au moins une couche d'insonorisation (301) ayant une hauteur radiale (t) et une largeur axiale (L), où ladite couche d'insonorisation (301) est attachée à une surface radialement interne (113) du pneu (100) placée au niveau de la bande de roulement (109) ;
dans lequel la couche d'insonorisation (301) délimite, conjointement avec la surface radialement interne (113), un canal (309) ;
dans lequel le canal (309) est délimité par une rainure (308) formée dans une face radialement externe (306) de la couche d'insonorisation (301) et associée à la surface radialement interne (133) du pneu (100) et par ladite surface radialement interne (133) du pneu (100) ;
dans lequel le canal (309) s'étend le long d'une direction sensiblement circonférentielle ;
**caractérisé en ce que**, dans une section radiale, le rapport Ar/S entre l'aire d'une section de passage (Ar) du canal (309) et une section totale (S) de la couche d'insonorisation (301) est compris entre environ 0,04 et environ 0,2 ;
dans lequel la section totale (S) de la couche d'insonorisation (301) est la surface d'une section d'empreinte de ladite couche d'insonorisation (301), comprenant également la surface d'une section de rainure formée dans la couche d'insonorisation (301).

2. Pneu tel que revendiqué dans la revendication 1, dans lequel le rapport t/C entre la hauteur radiale (t) de la section totale de la couche d'insonorisation (301) et la largeur de section transversale maximale (C) du pneu (100) est inférieur ou égal à environ 0,2.

3. Pneu tel que revendiqué dans la revendication 1 ou 2, dans lequel l'aire de la section de passage (Ar) du canal (309) est comprise entre environ 150 mm² et environ 1600 mm².

4. Pneu tel que revendiqué dans la revendication 1, 2 ou 3, dans lequel, dans une section radiale, le canal (309) a une dimension radiale maximale (r), dans lequel le rapport r/t entre la dimension radiale maximale (r) et la hauteur radiale (t) de la section totale est compris entre environ 0,2 et environ 0,8.

5. Pneu tel que revendiqué dans l'une des revendications précédentes, dans lequel, dans une section radiale, le canal (309) a une dimension radiale maximale (r) supérieure ou égale à environ 10 mm.

6. Pneu tel que revendiqué dans l'une des revendications précédentes, dans lequel, dans une section radiale, le canal (309) a une dimension axiale maximale (x), dans lequel le rapport x/L entre la dimension axiale maximale (x) et la largeur axiale (L) de la couche d'insonorisation est compris entre environ 0,1 et environ 0,4.

7. Pneu tel que revendiqué dans l'une des revendications précédentes, dans lequel le rapport t/C entre la hauteur radiale de la section totale (t) et la largeur de section transversale maximale (C) est compris entre environ 0,05 et environ 0,18.

8. Pneu tel que revendiqué dans l'une des revendications précédentes, dans lequel, dans une section radiale, le canal (309) est sensiblement centré par rapport à un plan équatorial (Y-Y) du pneu (100).

9. Pneu tel que revendiqué dans la revendication 6, dans lequel la bande de roulement (109) comprend une nervure centrale (114') placée sensiblement au niveau du plan équatorial (Y-Y) du pneu (100) et ayant une largeur axiale (k), où le rapport x/k entre la dimension axiale maximale (x) et la largeur (k) de la nervure centrale (114') est compris entre environ 0,7 et environ 1,2.

10. Pneu tel que revendiqué dans l'une des revendications précédentes, dans lequel, dans une section radiale, le canal (309) a une partie ayant un profil incurvé.

11. Pneu tel que revendiqué dans la revendication précédente, dans lequel, dans une section radiale, le canal (309) a une partie ayant un profil semi-circulaire ou semi-elliptique.

12. Pneu tel que revendiqué dans l'une des revendications précédentes, dans lequel la couche d'insonorisation (301) comprend une pluralité de blocs espacés de manière circonférentielle et discrets (305) et chaque bloc (305) a une section (311) dudit canal (309).

13. Pneu tel que revendiqué dans la revendication précédente, dans lequel chacune desdites sections (311) a une première extrémité ouverte dans un interstice (310) délimité entre deux blocs successifs (305).

14. Pneu tel que revendiqué dans la revendication précédente, dans lequel chacune desdites sections (305) a une deuxième extrémité opposée à la première extrémité et fermée.

15. Pneu tel que revendiqué dans l'une des revendications précédentes 1 à 12, dans lequel chacune desdites sections (305) a une première extrémité et une deuxième extrémité qui sont ouvertes dans des interstices respectifs (310) délimités entre deux blocs successifs (305) .
